# FASCICULE DE BREVET EUROPEEN

(11) **EP 1 530 504 B1**
(45) Date de publication et mention de la délivrance du brevet: **09.03.2011**
(21) Numéro de dépôt: 03750823.1
(22) Date de dépôt: 18.07.2003
(51) Int. Cl.: B01J 13/14, B01J 2/08

(54) **PROCEDE DE PREPARATION DE BILLES CONTENANT UNE MATRICE MINERALE RETICULEE.**
VERFAHREN ZUR HERSTELLUNG VON MIKROKAPSLEN, DIE EIN VERNETZTES MINERAL ENTHALTEN
METHOD FOR PREPARING BEADS CONTAINING A CROSSLINKED MINERAL MATRIX

(30) Priorité: 22.07.2002 FR 0209286
(43) Date de publication de la demande: 18.05.2005
(73) Titulaire: CENTRE NATIONAL DE LA RECHERCHE SCIENTIFIQUE (CNRS), 75016 Paris (FR)
(72) Inventeur: PROUZET, Eric, F-34000 Montpellier (FR); TOKUMOTO, Miriam, 16400-000 Lins - SP (BR); KRIVAYA, Aurore, F-34360 ST Chinian (FR)
(74) Mandataire: Neyret, Daniel Jean Marie
(86) Numéro de dépôt international: PCT/FR2003/002285
(87) Numéro de publication internationale: WO 2004/009229

(56) Documents cités:
- WO-A-00/25908
- FR-A- 2 785 292
- US-A- 4 063 856
- US-A- 4 797 358
- US-A- 5 500 162

## Description

La présente invention concerne un procédé pour la préparation de billes contenant une matrice minérale solide réticulée, ainsi que les billes obtenues. Un tel procédé est décrit dans WO-A-0 025 908.

Les matériaux constitués par des particules de silice sont utilisés dans de nombreux domaines, par exemple dans le domaine médical ou dans l'industrie des cosmétiques. Lorsque les particules ont des dimensions microniques, elles constituent des matériaux pulvérulents difficiles à manipuler. Les particules millimétriques ne présentent pas ces inconvénients et divers procédés pour leur fabrication ont été développés.

L'un de ces procédés consiste à préparer une suspension contenant une poudre d'oxyde préparé au préalable et un liant organique, à mettre en forme (par exemple par extrusion), puis à consolider par un traitement thermique, et éventuellement à déposer une phase active dans les pores. Un tel procédé fait appel à un appareillage spécifique pour assurer la mise en forme et la géométrie des particules ainsi formées. Une autre procédé consiste à préparer une suspension aqueuse contenant une poudre d'oxyde et un liant, puis à ajouter cette suspension à une huile pour réaliser une microémulsion de gouttelettes aqueuses qui contiennent une phase minérale qui réticule. Par ce procédé, on ne peut cependant obtenir que des billes de taille micronique, entre 0,1 et 100 microns.

US-4,063,856 décrit un procédé pour l'obtention de billes d'un matériau minéral, qui consiste à mettre en solution dans l'eau un liant organique, par exemple un alginate, capable de gélifier en présence d'un sel de cation divalent ou trivalent (par exemple un sel de calcium), à mettre en suspension dans ladite solution les précurseurs du matériau minéral formant les billes, puis à introduire cette suspension goutte à goutte dans une solution dudit sel divalent ou trivalent. En outre, US-4,797,358 décrit un procédé pour la préparation de grains de silice contenant un microorganisme ou une enzyme. Le procédé consiste à préparer un mélange aqueux contenant le microorganisme ou l'enzyme, un alginate, un sol de silice, puis à ajouter ce mélange à une solution aqueuse d'un sel de cation plurivalent (chlorure de calcium ou d'aluminium, acétate de calcium, sulfate d'aluminium) pour obtenir des grains gélifiés. Les billes ainsi obtenues sont des billes molles. Dans le procédé de ces deux documents, la silice ajoutée constitue une simple charge minérale dispersée au sein de la matrice d'alginate gélifiée et ne forme en aucune manière une matrice solide réticulée.

Le but de la présente invention est de fournir un procédé pour la préparation de billes ayant une matrice minérale réticulée de dimension contrôlée dans le domaine millimétrique, ainsi que les billes obtenues.

Le procédé selon la présente invention pour l'obtention de billes à matrice minérale réticulée est caractérisé en ce qu'il consiste :
- à préparer des billes gélifiées en versant goutte à goutte une suspension contenant un précurseur de la matrice minérale et un alginate, dans une solution d'un sel de cation plurivalent dont le pH est inférieur à 3, de préférence inférieur à 2,
- et à réticuler le précurseur de la matrice minérale par un procédé sol-gel.

Par matrice minérale réticulée, on entend une matrice dans laquelle les éléments constitutifs (molécules ou particules) sont connectés par un réseau tridimensionnel. Par cation plurivalent, on entend un cation ayant une charge au moins égale à 2.

L'alginate utilisé pour former des billes molles peut être un alginate de métal alcalin. L'alginate de sodium est particulièrement préféré. Les actions combinées du cation plurivalent (qui s'échange avec les ions alcalins de l'alginate) et de l'acidité du milieu contribuent à gélifier cet alginate et à figer les gouttes en billes " molles ". Le temps de maintien des billes dans cette solution peut varier entre 1 heure et 24 heures.

Le précurseur de la matrice minérale est un composé minéral capable de réticuler par un procédé sol-gel, choisi parmi les composés minéraux qui possèdent des groupements hydroxyles liés à un métal M lorsqu'ils sont en solution. M peut être Si, Al, Ti ou Zr, Si et Al sont particulièrement préférés. Ces composés peuvent être choisis parmi les composés capables de gélifier suivant le mécanisme de polymérisation d'entités moléculaires (PEM) et parmi les composés capables de gélifier suivant le mécanisme de déstabilisation de solutions colloïdales (DCS). Ces mécanismes sont décrits notamment par C.J. Brinker & G.W. Scherrer ["Sol-Gel Science, The Physics and Chemistry of Sol-Gel Processing", Eds, 1990, Academic Press Inc. (Harcourt Brace Jovanovich Publishers, ISBN 0-12-134970-5], ou par M. Henry, J.P. Jolivet & J. Livage ["De la solution à l'oxyde", InterEditions / CNRS Editions Eds, 1995 Paris, ISBN 2-271-05252-1].

Parmi les composés du type PEM, on peut citer les silicates de métaux alcalins, (notamment le silicate de sodium). Parmi les composés du type DSC, on peut citer l'alumine de type boehmite et la silice colloïdale.

Un composé du type PEM à base de silice peut être réticulé par un fluorure, notamment un fluorure de métal alcalin. Une solution aqueuse de fluorure de sodium, dont la teneur en fluorure est comprise entre 0,001 M et 1 M, est particulièrement appropriée. Dans ce cas, la gélification de l'alginate et la réticulation de la matrice minérale sont effectuées en deux étapes successives. Il est souhaitable de laisser reposer le milieu réactionnel contenant les billes formées par l'alginate gélifié à température ambiante pendant une durée comprise entre 1 et 24 heures, avant de les soumettre à l'action du fluorure. Lors de l'étape de réticulation du précurseur minéral, les billes sont maintenues en suspension dans le milieu réactionnel contenant le fluorure sous agitation douce, jusqu'à réticulation complète de la silice. Une durée entre 6 et 72 heures est en général appropriée.

Pour un composé du type DSC, le pH inférieur à 3 du milieu réactionnel lors de la gélification de l'alginate est suffisant pour provoquer une réticulation. La gélification de l'alginate et la réticulation de la matrice minérale sont par conséquent effectuées simultanément. Un pH inférieur à 2 est particulièrement préféré. Il est souhaitable de laisser reposer le milieu réactionnel contenant les billes formées par l'alginate gélifié et la matrice minérale réticulée à température ambiante pendant une durée comprise entre 1 et 24 heures.

Le procédé est mis en oeuvre à une température entre 10°C et 60°C. Il est particulièrement avantageux d'opérer à la température ambiante.

Le sel de cation plurivalent utilisé pour la gélification de l'alginate peut être choisi parmi les sels dont l'anion est un halogénure, un nitrate ou un sulfate et dont le cation est un cation de métal alcalino-terreux, de métal de transition ou de métal noble. A titre d'exemple, on peut citer les sels de nickel, de fer, de cobalt, d'aluminium, de calcium, d'étain, de zinc ou de platine. Lorsque l'on utilise un précurseur du type PEM (par exemple un silicate) comme précurseur de la matrice minérale, le cation du sel utilisé comme agent gélifiant de l'alginate doit être différent du calcium. En effet, lors de la réticulation du silicate par le fluorure, le calcium serait extrait du gel d'alginate par les ions fluorures pour former CaF₂ insoluble en milieu aqueux, et la structure gélifiée de l'alginate serait détruite.

Le matériau obtenu après réticulation de la matrice minérale est formé de billes en suspension dans un milieu aqueux. Les billes formées ont un diamètre de 0,5 mm à quelques mm, généralement de 0,5 mm à 6 mm. Elles sont constituées par une matrice d'alginate gélifié hydratée, par une matrice minérale réticulée résultant de la gélification du précurseur minéral par un procédé sol-gel, ainsi que par un hydroxyde du cation plurivalent du sel utilisé comme agent gélifiant. A ce stade, le produit peut être conservé tel quel pendant plusieurs jours. Le diamètre des billes dépend notamment de la taille des gouttes de solution versées dans la solution de sel de cation multivalent. Ce diamètre peut être ajusté en choisissant le matériel approprié pour la formation des gouttes.

La composition et les propriétés des billes peuvent être modifiées par le choix du sel plurivalent utilisé comme agent gélifiant pour l'alginate. Par exemple, l'utilisation d'un sel de fer comme agent gélifiant de l'alginate donne une coloration brun-rouge aux billes, alors que l'utilisation d'un sel d'aluminium ne donne pas de coloration. Des modifications peuvent également être obtenues par addition de divers composés dans le milieu réactionnel avant la gélification de l'alginate, lesdits composés étant choisis parmi ceux qui n'ont pas d'effet sur la gélification de l'alginate. Lorsque les billes sont destinées à être utilisées dans des compositions cosmétiques, on peut ajouter au milieu réactionnel, avant la gélification de l'alginate, des pigments ou des colorants organiques à usage cosmétique, de la poudre de kaolin ou d'une autre argile, ou un agent colorant. Lorsqu'on souhaite obtenir des billes poreuses, on peut ajouter un agent porogène, par exemple un agent tensioactif, au milieu réactionnel avant la gélification de l'alginate.

Les billes obtenues après réticulation de la matrice minérale peuvent ensuite être utilisées telles quelles. Elles peuvent aussi être extraites du milieu liquide par filtration et subir divers autres traitements. En général, les billes sont lavées à l'eau ou par une solution aqueuse basique à pH < 8, afin d'éliminer l'acidité résiduelle, ce lavage ne détruisant pas leur structure si le pH reste inférieur à 8.

Dans un mode de réalisation particulier, les billes séparées par filtration sont soumises à un séchage à l'air, après avoir éventuellement été lavées à l'acétone ou à l'alcool. On obtient ainsi des billes sèches d'un matériau constitué par un réseau d'alginate, une matrice minérale, et un hydroxyde du cation provenant de l'agent de gélification de l'alginate. Un tel traitement provoque cependant une diminution de la taille des billes dans un rapport d'environ 5/1.

Dans un autre mode de réalisation, le procédé comprend une étape au cours de laquelle les billes séparées du milieu réactionnel par filtration sont séchées par lyophilisation. Le matériau constituant les billes présente dans ce cas une composition analogue à celle qui est obtenue par séchage à l'air. Cependant, un séchage par lyophilisation provoque une diminution nettement moindre de la taille des billes.

Dans un troisième mode de réalisation, les billes extraites du milieu réactionnel par filtration sont lavées à l'acétone ou à l'alcool, puis placées dans une solution contenant un alcoxyde d'un métal M' dilué dans un solvant organique anhydre compatible avec l'alcoxyde. Le métal M' peut être tout métal pouvant donner un alcoxyde de la forme M'(OR)ₙ, R étant un groupe alkyle et n étant la valence de M'. A titre d'exemple, on peut citer le titane, le zirconium, l'aluminium, le niobium et le tantale. Le solvant organique est de préférence l'alcool qui correspond au groupe alcoxy de l'alcoxyde de métal (par exemple le butanol pour le tertiobutoxyde de titane, le propanol pour l'isopropoxyde de titane). L'alcoxyde s'hydrolyse uniquement au contact de la bille, car celle-ci contient de l'eau résiduelle. On obtient ainsi des billes formées d'un coeur ayant une composition analogue à celles des billes obtenues par simple séchage, et d'une couche superficielle d'oxyde ou d'hydroxyde du métal M.

Dans un quatrième mode de réalisation, les billes séparées du milieu réactionnel par filtration sont soumises à une calcination à une température comprise entre 400°C et 800°C. On obtient ainsi des billes minérales poreuses exemptes de composés organiques, constituées par une matrice minérale réticulée et l'hydroxyde du cation du sel qui a été utilisé comme agent de réticulation de l'alginate. Ce mode de réalisation est particulièrement approprié lorsqu'on a introduit des agents organiques porogènes dans le milieu réactionnel avant la gélification de l'alginate.

Le procédé proposé permet d'obtenir des billes calibrées, à une grande cadence. La taille des billes ne dépend que de la taille de la goutte initiale versée dans la solution de sel plurivalent. Un autre avantage réside dans le fait que les étapes de préparation proprement dite des billes sont effectuées en milieu aqueux, ce qui réduit les risques de pollution liés à l'utilisation de solvants organiques. En outre, les billes obtenues sont biocompatibles et peuvent être préparées avec des composants conformes à la réglementation concernant les produits alimentaires et cosmétiques.

La présente invention est illustrée plus en détail par les exemples suivants, auxquels elle n'est cependant pas limitée.

### Exemple 1

On a dissous 1 g d'alginate de sodium dans 50 ml d'eau distillée et l'on a ajouté goutte à goutte à cette solution sous agitation magnétique, 6 g de silicate de sodium Na₂Si₃O₇. La solution aqueuse obtenue, dite "solution mère", est une solution visqueuse jaune qui présente un pH voisin de 9.

On a préparé une solution de FeCl₃ (0,5 M) en ajoutant 4 g de FeCl₃ à 50 ml d'eau distillée dont le pH a été ajusté à une valeur entre 0,6 et 0,8 par addition d'une quantité appropriée d'acide chlorhydrique. A l'aide d'une seringue comprenant une aiguille dont le diamètre de sortie est de 0,6 mm, on a versé goutte à goutte la solution mère dans ladite solution de FeCl₃. Au contact de la solution de FeCl₃, les gouttes de solution mère ont gélifié et des perles se sont formées. On laissé le milieu réactionnel sous agitation magnétique pendant 14 h.

On a ensuite séparé les billes du milieu réactionnel par filtration, on les a rincées à l'eau et versées dans une solution de NaF 0,1 M, préparée au préalable par addition de 0,2 g de NaF à 50 ml d'eau distillée. L'ion F⁻ étant un catalyseur de condensation de la silice, il permet une réticulation rapide du silicate de sodium. Le milieu réactionnel a été maintenu sous agitation pendant 14 h, puis on a séparé les billes par filtration.

Une fraction des billes ainsi récupérée a été conservée dans l'eau distillée, en vue d'une utilisation ultérieure.

Une deuxième fraction des billes a été déshydratée par maintien dans l'acétone pendant 2 heures, puis séchage à l'air.

Une troisième fraction des billes a été déshydratée par maintien dans l'acétone pendant 2 heures, puis séchage par lyophilisation.

L'ensemble des billes finalement obtenues présentent une coloration rouge-brun résultant de la présence du sel de fer.

### Exemple 2

On a reproduit le mode opératoire de l'exemple 1, en remplaçant la solution 0,5 M de FeCl₃ par une solution 0,5 M de AlCl₃, toutes choses étant égales par ailleurs. Les billes obtenues ont une coloration blanche.

### Exemple 3

On a dissous 1 g d'alginate de sodium dans 50 ml d'eau distillée et l'on a ajouté goutte à goutte à cette solution sous agitation magnétique, une suspension aqueuse contenant 1,5 g de boehmite dans 25 ml d'eau distillée. La solution aqueuse obtenue, dite "solution mère", est une solution visqueuse jaune qui présente un pH voisin de 9.

On a préparé une solution de FeCl₃ (0,5 M) en ajoutant 4 g de FeCl₃ à 50 ml d'eau distillée dont le pH a été ajusté à une valeur entre 0,6 et 0,8 par addition d'une quantité appropriée d'acide chlorhydrique. A l'aide d'une seringue comprenant une aiguille dont le diamètre de sortie est de 0,6 mm, on a versé goutte à goutte la solution mère dans ladite solution de FeCl₃. Au contact de la solution de FeCl₃, les gouttes de solution mère ont gélifié et des perles se sont formées. On laissé le milieu réactionnel sous agitation magnétique pendant 14 h, en maintenant à pH 1 par addition de d'une solution d'acide chlorhydrique (M).

On a ensuite séparé les billes du milieu réactionnel par filtration.

Une fraction des billes ainsi récupérée a été conservée dans l'eau distillée, en vue d'une utilisation ultérieure.

Une deuxième fraction des billes a été déshydratée par maintien dans l'acétone pendant 2 heures, puis séchage à l'air.

Une troisième fraction des billes a été déshydratée par maintien dans l'acétone pendant 2 heures, puis séchage par lyophilisation.

L'ensemble des billes finalement obtenues présentent une coloration rouge-brun résultant de la présence du sel de fer.

### Exemple 4

On a dissous 1 g d'alginate de sodium dans 50 ml d'eau distillée et l'on a ajouté goutte à goutte à cette solution sous agitation magnétique, 6 g de silicate de sodium Na₂Si₃O₇, La solution aqueuse obtenue, dite "solution mère", est une solution visqueuse jaune qui présente un pH voisin de 9. A cette solution mère, on a ajouté 0,1 g d'un pigment minéral à effet nacrant à base de mica et de titane, conforme à la législation portant sur les produits cosmétiques.

On a préparé une solution de AlCl₃ (0,5 M) en ajoutant 3,3 g de AlCl₃ à 50 ml d'eau distillée dont le pH a été ajusté à une valeur entre 0,6 et 0,8 par addition d'une quantité appropriée d'acide chlorhydrique. A l'aide d'une seringue comprenant une aiguille dont le diamètre de sortie est de 0,6 mm, on a versé goutte à goutte la solution mère contenant l'agent nacrant dans ladite solution de AlCl₃. Au contact de la solution de AlCl₃, les gouttes de solution mère ont gélifié et des perles se sont formées. On a laissé le milieu réactionnel sous agitation magnétique pendant 14 h.

On a ensuite séparé les billes du milieu réactionnel par filtration, on les a rincées à l'eau et on les a conservées dans l'eau distillées.

### Exemple 5

On a reproduit le mode opératoire de l'exemple 4, mais en ajoutant à la solution mère, en plus de l'agent nacrant, une charge minérale constituée par 1,3 g de kaolin.

Les billes obtenues à la fin de l'étape de gélification de l'alginate présentent une coloration rose laiteuse. La présence du kaolin limite le retrait lorsque les billes sont séchées à l'air.

### Exemple 6

On a dissous 1 g d'alginate de sodium dans 50 ml d'eau distillée et l'on a ajouté goutte à goutte à cette solution sous agitation magnétique, une suspension aqueuse contenant 1,5 g de boehmite dans 25 ml d'eau distillée, pour préparer une suspension mère.

On a préparé séparément une solution aqueuse colorée en ajoutant 3,3 g de AlCl₃ et 0,2 g d'un pigment orange organique conforme à la législation sur les produits à usage alimentaire et cosmétique à 50 ml d'eau distillée, en ajustant le pH à une valeur entre 0,6 et 0,8. A l'aide d'une seringue comprenant une aiguille dont le diamètre de sortie est de 0,6 mm, on a versé goutte à goutte la suspension mère dans ladite solution de AlCl₃. Au contact de la solution de AlCl₃, les gouttes de suspension mère ont gélifié et des perles de couleur orange dans lesquelles la boehmite est réticulée se sont formées.

Les billes ont été séparées par filtration, rincées plusieurs fois à l'eau pour éliminer les résidus acides, puis conservées dans l'eau distillée.

### Exemple 7

On a dissous 0,74 g d'un agent tensioactif CH₃(CH₂)₁₄(CH₂CH₂O)₁₂H [commercialisé sous la dénomination TERGITOL 15S12 par la société Union Carbide], dans 49 ml d'eau désionisée. On a ajouté 2 ml d'acide chlorhydrique N et on a maintenu la solution à une température inférieure à 2°C. On a ensuite ajouté goutte à goutte 5,9 g de silicate de sodium (Na₂Si₃O₇), ce qui a porté le pH à 9. Parallèlement, on a dissous 1 g d'alginate de sodium dans 50 ml d'eau désionisée, puis on a ajouté cette solution à la solution d'alginate pour obtenir une solution A.

On a également préparé une solution 0,1 M de chlorure de nickel (II) en ajoutant 5 ml d'une solution aqueuse M de chlorure de nickel (II) dans 50 ml d'eau désionisée.

On a ensuite versé goutte à goutte la solution A dans la solution 0,1 M de chlorure de nickel et on a observé la formation de perles par gélification de l'alginate au contact du chlorure de nickel (II). On a ensuite maintenu le milieu réactionnel contenant les perles gélifiées à température ambiante sous agitation magnétique pendant 12 h.

Les perles obtenues ont ensuite été filtrées et rincées à l'eau, puis elles ont été versées dans une solution aqueuse 0,1 M de NaF, obtenue en dissolvant 0,4 g de NaF dans 100 ml d'eau désionisée. La suspension a été maintenue à température ambiante sous agitation magnétique pendant 24 heures. Ensuite, les perles ont été récupérées par filtration et rincées à l'eau et on les a conservées dans l'eau.

Les perles obtenues sont utilisables comme support solide de catalyseur.

## Revendications

1. Procédé pour la préparation de billes ayant une matrice minérale réticulée de dimension contrôlée dans le domaine millimétrique, **caractérisé en ce qu'**il consiste à préparer des billes gélifiées en versant goutte à goutte une suspension contenant un précurseur de la matrice minérale et un alginate, dans une solution d'un sel de cation plurivalent dont le pH est inférieur à 3, et à réticuler le précurseur de la matrice minérale par un procédé sol-gel.

2. Procédé selon la revendication 1, **caractérisé en ce que** le pH est inférieur à 2.

3. Procédé selon la revendication 1, **caractérisé en ce que** l'alginate est un alginate de métal alcalin.

4. Procédé selon la revendication 1, **caractérisé en ce que** les billes sont maintenues dans le milieu réactionnel pendant une durée de 1 heure à 24 heures pour la gélification de l'alginate.

5. Procédé selon la revendication 1, **caractérisé en ce que** le précurseur de la matrice minérale est un composé minéral capable de réticuler par un procédé sol-gel, choisi parmi les composés minéraux qui possèdent des groupements hydroxyles liés à un métal lorsqu'ils sont en solution.

6. Procédé selon la revendication 5, **caractérisé en ce que** le précurseur de la matrice minérale est un composé capable de gélifier suivant le mécanisme de polymérisation d'entités moléculaires (PEM).

7. Procédé selon la revendication 6, **caractérisé en ce que** le précurseur est un silicate de métal alcalin.

8. Procédé selon la revendication 5, **caractérisé en ce** le précurseur de la matrice minérale est un composé capable de gélifier suivant le mécanisme de déstabilisation de solutions colloïdales (DCS).

9. Procédé selon la revendication 8, **caractérisé en ce que** le précurseur de la matrice minérale est une alumine de type boehmite ou une silice colloïdale.

10. Procédé selon l'une des revendications 6 ou 7, **caractérisé en ce que** le précurseur de la matrice minérale est réticulé par un fluorure de métal alcalin, au cours d'une étape suivant la gélification de l'alginate, le sel de cation plurivalent utilisé pour la gélification de l'alginate ayant un cation autre que le calcium.

11. Procédé selon la revendication 10, **caractérisé en ce que** la réticulation de la matrice minérale est effectuée en maintenant les billes en suspension sous agitation douce, pendant une durée entre 6 et 72 heures.

12. Procédé selon l'une des revendications 8 ou 9, **caractérisé en ce que** le précurseur de la matrice minérale est réticulé sous l'effet du pH du milieu réactionnel lors de la gélification de l'alginate.

13. Procédé selon la revendication 12, **caractérisé en ce que** le milieu réactionnel contenant les billes formées par l'alginate gélifié et la matrice minérale réticulée est maintenu à température ambiante pendant une durée comprise entre 1 et 24 heures.

14. Procédé selon la revendication 1, **caractérisé en ce qu'**il est mis en oeuvre à une température entre 10°C et 60°C.

15. Procédé selon la revendication 1, **caractérisé en ce que** le sel de cation plurivalent utilisé pour la gélification de l'alginate est choisi parmi les sels dont l'anion est un halogénure, un nitrate ou un sulfate et le cation est un cation de métal alcalino-terreux, de métal de transition ou de métal noble.

16. Procédé selon la revendication 1, **caractérisé en ce que** l'on ajoute à la suspension contenant le précurseur de la matrice minérale et l'alginate au moins un additif choisi parmi les pigments et les agents colorants organiques à usage cosmétique, la poudre de kaolin, les argiles, les agents colorants et les agents porogènes.

17. Procédé selon la revendication 1, **caractérisé en ce que** les billes obtenues après réticulation de la matrice minérale sont extraites du milieu réactionnel par filtration.

18. Procédé selon la revendication 17, **caractérisé en ce que** les billes séparées par filtration sont lavées à l'eau ou par une solution aqueuse basique à pH < 8.

19. Procédé selon l'une des revendications 17 ou 18, **caractérisé en ce que** les billes séparées par filtration sont soumises à un séchage à l'air, après avoir éventuellement été lavées à l'acétone ou à l'alcool.

20. Procédé selon l'une des revendications 17 ou 18, **caractérisé en ce que** les billes séparées du milieu réactionnel par filtration sont séchées par lyophilisation.

21. Procédé selon l'une des revendications 17 ou 18, **caractérisé en ce que** les billes extraites du milieu réactionnel par filtration sont lavées l'acétone ou à l'alcool, puis placées dans une solution contenant un alcoxyde d'un métal dilué dans un solvant organique anhydre.

22. Procédé selon l'une des revendications 17 ou 18, **caractérisé en ce que** les billes séparées du milieu réactionnel par filtration sont soumises à une calcination à une température comprise entre 400°C et 800°C.

23. Matériau obtenu par un procédé selon la revendication 1, formé de billes en suspension dans un milieu aqueux, **caractérisé en ce que** les billes ont un diamètre de 0,5 mm à quelques mm et elles sont constituées par une matrice d'alginate gélifié hydratée, une matrice minérale réticulée et un hydroxyde du cation plurivalent du sel utilisé comme agent gélifiant.

24. Billes obtenues par un procédé selon l'une des revendications 19 ou 20, **caractérisées en ce qu'**elles sont constituées par un réseau d'alginate, une matrice minérale réticulée, et un hydroxyde du cation provenant de l'agent de gélification de l'alginate.

25. Billes obtenues par un procédé selon la revendication 21, **caractérisées en ce qu'**elle sont formées d'un coeur constitué par un réseau d'alginate, une matrice minérale réticulée, et un hydroxyde du cation provenant de l'agent de gélification de l'alginate, et d'une couche superficielle d'oxyde ou d'hydroxyde de métal.

26. Billes obtenues par un procédé selon la revendication 22, **caractérisé en ce qu'**elles sont constituées par une matrice minérale réticulée et un hydroxyde du cation provenant de l'agent de gélification de l'alginate, elles sont poreuses et exemptes de composés organiques.

27. Billes selon l'une des revendications 24 à 26, **caractérisées en ce qu'**elles contiennent en outre au moins un composé choisi parmi les pigments et les agents colorants organiques à usage cosmétique, la poudre de kaolin, les argiles, les agents colorants.

## Claims

1. A process for the preparation of beads having a cross-linked mineral matrix with controlled dimensions in the millimetre range, **characterised in that** it consists of preparing gelled beads by pouring, drop by drop, a suspension containing a precursor of the mineral matrix and an alginate into a solution of a polyvalent cation salt, the pH of which is less than 3, and of cross-linking the precursor of the mineral matrix by a sol-gel process.

2. The process according to Claim 1, **characterised in that** the pH is less than 2.

3. The process according to Claim 1, **characterised in that** the alginate is an alkali metal alginate.

4. The process according to Claim 1, **characterised in that** the beads are kept in the reaction medium for a duration of 1 hour to 24 hours for the gelling of the alginate.

5. The process according to Claim 1, **characterised in that** the precursor of the mineral matrix is a mineral compound capable of cross-linking by a sol-gel process, chosen from the mineral compounds which have hydroxyl groups bonded to a metal when they are in solution.

6. The process according to Claim 5, **characterised in that** the precursor of the mineral matrix is a compound capable of gelling according to the polymerisation of molecular entities (PME) mechanism.

7. The process according to Claim 6, **characterised in that** the precursor is an alkali metal silicate.

8. The process according to Claim 5, **characterised in that** the precursor of the mineral matrix is a compound capable of gelling according to the destabilisation of colloidal solutions (DCS) mechanism.

9. The process according to Claim 8, **characterised in that** the precursor of the mineral matrix is a boehmite-type alumina or a colloidal silica.

10. The process according to either of Claims 6 or 7, **characterised in that** the precursor of the mineral matrix is cross-linked by an alkali metal fluoride during a stage following the gelling of the alginate, the polyvalent cation salt used for the gelling of the alginate having a cation other than calcium.

11. The process according to Claim 10, **characterised in that** the cross-linking of the mineral matrix is carried out while keeping the beads suspended with gentle stirring for a duration of between 6 and 72 hours.

12. The process according to either of Claims 8 or 9, **characterised in that** the precursor of the mineral matrix is cross-linked under the effect of the pH of the reaction medium during the gelling of the alginate.

13. The process according to Claim 12, **characterised in that** the reaction medium containing the beads formed by the gelled alginate and the cross-linked mineral matrix is kept at ambient temperature for a duration of between 1 and 24 hours.

14. The process according to Claim 1, **characterised in that** it is implemented at a temperature of between 10°C and 60°C.

15. The process according to Claim 1, **characterised in that** the polyvalent cation salt used for the gelling of the alginate is chosen from the salts for which the anion is a halide, a nitrate or a sulphate, and for which the cation is an alkaline-earth metal, transition metal or noble metal cation.

16. The process according to Claim 1, **characterised in that** one adds to the suspension containing the precursor of the mineral matrix and the alginate at least one additive chosen from pigments and organic colouring agents for cosmetic use, kaolin powder, clays, colouring agents and pore-forming agents.

17. The process according to Claim 1, **characterised in that** the beads obtained after cross-linking the mineral matrix are extracted from the reaction medium by filtration.

18. The process according to Claim 17, **characterised in that** the beads separated by filtration are washed with water or with a basic aqueous solution at pH < 8.

19. The process according to either of Claims 17 or 18, **characterised in that** the beads separated by filtration are subjected to drying in the air, optionally after having been washed with acetone or with alcohol.

20. The process according to either of Claims 17 or 18, **characterised in that** the beads separated from the reaction medium by filtration are dried by lyophilisation.

21. The process according to either of Claims 17 or 18, **characterised in that** the beads extracted from the reaction medium by filtration are washed with acetone or with alcohol and are then placed in a solution containing an alkoxide of a metal diluted in an anhydrous organic solvent.

22. The process according to either of Claims 17 or 18, **characterised in that** the beads separated from the reaction medium by filtration are subjected to calcination at a temperature of between 400°C and 800°C.

23. A material obtained by a process according to Claim 1, formed from beads suspended in an aqueous medium, **characterised in that** the beads have a diameter of 0.5 mm to a few mm and are comprised of a hydrated matrix of gelled alginate, a cross-linked mineral matrix and a hydroxide of the polyvalent cation of the salt used as the gelling agent.

24. Beads obtained by a process according to either of Claims 19 or 20, **characterised in that** they are comprised of an alginate network, a cross-linked mineral matrix or a hydroxide of the cation originating from the agent for gelling the alginate.

25. Beads obtained by a process according to Claim 21, **characterised in that** they are formed by a core comprised of an alginate network, a cross-linked mineral matrix and a hydroxide of the cation originating from the agent for gelling the alginate and by a surface layer of metal oxide or hydroxide.

26. Beads obtained by a process according to Claim 22, **characterised in that** they are comprised of a cross-linked mineral matrix and a hydroxide of the cation originating from the agent for gelling the alginate, they are porous and devoid of organic compounds.

27. Beads according to any of Claims 24 to 26, **characterised in that** they contain, furthermore, at least one compound chosen from pigments and organic colouring agents for cosmetic use, kaolin powder, clays and colouring agents.

## Patentansprüche

1. Verfahren zur Herstellung von Kugeln, die eine vernetzte Mineralmatrix mit einer im Millimeterbereich kontrollierten Dimension aufweisen, **dadurch gekennzeichnet, dass** es darin besteht, gelatinierte Kugeln herzustellen, indem eine Suspension, die einen Vorläufer der Mineralmatrix und ein Alginat enthält, tropfenweise in eine Lösung aus einem mehrwertigen Kationensalz, dessen pH-Wert kleiner als 3 ist, gegossen wird, und indem der Vorläufer der Mineralmatrix durch ein Sol-Gel-Verfahren vernetzt wird.

2. Verfahren nach Anspruch 1, **dadurch gekennzeichnet, dass** der pH-Wert kleiner als 2 ist.

3. Verfahren nach Anspruch 1, **dadurch gekennzeichnet, dass** das Alginat ein Alkalimetallalginat ist.

4. Verfahren nach Anspruch 1, **dadurch gekennzeichnet, dass** die Kugeln für einen Zeitraum von 1 Stunde bis 24 Stunden in dem Reaktionsmedium gehalten werden, damit das Alginat gelatiniert.

5. Verfahren nach Anspruch 1, **dadurch gekennzeichnet, dass** der Vorläufer der Mineralmatrix eine mineralische Verbindung ist, die in der Lage ist, mittels Sol-Gel-Verfahren zu vernetzen, ausgewählt aus den mineralischen Verbindungen, die Hydroxylgruppen aufweisen, die an ein Metall gebunden sind, wenn sie in Lösung sind.

6. Verfahren nach Anspruch 5, **dadurch gekennzeichnet, dass** der Vorläufer der Mineralmatrix eine Verbindung ist, die in der Lage ist, gemäß dem Mechanismus der Polymerisation molekularer Einheiten (PME) zu gelatinieren.

7. Verfahren nach Anspruch 6, **dadurch gekennzeichnet, dass** der Vorläufer ein Alkalimetallsilicat ist.

8. Verfahren nach Anspruch 5, **dadurch gekennzeichnet, dass** der Vorläufer der Mineralmatrix eine Verbindung ist, die in der Lage ist, gemäß dem Mechanismus der Destabilisierung kolloidaler Lösungen (DCS) zu gelatinieren.

9. Verfahren nach Anspruch 8, **dadurch gekennzeichnet, dass** der Vorläufer der Mineralmatrix ein Aluminiumoxid vom Typ Böhmit oder eine kolloidales Siliciumdioxid ist.

10. Verfahren nach einem der Ansprüche 6 oder 7, **dadurch gekennzeichnet, dass** der Vorläufer der Mineralmatrix während eines Schritts nach der Gelatinierung des Alginats durch ein Alkalimetallfluorid vernetzt wird, wobei das mehrwertige Kationensalz, das für die Gelatinierung des Alginats verwendet wird, ein Kation aufweist, das verschieden von Calcium ist.

11. Verfahren nach Anspruch 10, **dadurch gekennzeichnet, dass** die Vernetzung der Mineralmatrix durchgeführt wird, indem die Kugeln unter sanftem Rühren für einen Zeitraum zwischen 6 und 72 Stunden in Suspension gehalten werden.

12. Verfahren nach einem der Ansprüche 8 oder 9, **dadurch gekennzeichnet, dass** der Vorläufer der Mineralmatrix durch die Wirkung des pH-Werts des Reaktionsmediums während der Gelatinierung des Alginats vernetzt wird.

13. Verfahren nach Anspruch 12, **dadurch gekennzeichnet, dass** das Reaktionsmedium, das die Kugeln, die durch das gelatinierte Alginat gebildet wurden, und die vernetzte Mineralmatrix enthält, für einen Zeitraum im Bereich zwischen 1 und 24 Stunden auf Umgebungstemperatur gehalten wird.

14. Verfahren nach Anspruch 1, **dadurch gekennzeichnet, dass** es bei einer Temperatur zwischen 10 °C und 60 °C durchgeführt wird.

15. Verfahren nach Anspruch 1, **dadurch gekennzeichnet, dass** das mehrwertige Kationensalz, das zur Gelatinierung des Alginats verwendet wird, ausgewählt ist aus den Salzen, deren Anion ein Halogenid, ein Nitrat oder ein Sulfat ist und das Kation ein Kation eines Erdalkalimetalls, eines Übergangsmetalls oder eines Edelmetalls ist.

16. Verfahren nach Anspruch 1, **dadurch gekennzeichnet, dass** der Suspension, die den Vorläufer der Mineralmatrix und das Alginat enthält, mindestens ein Additiv zugegeben wird, ausgewählt aus Pigmenten und organischen Farbstoffen zur Verwendung in Kosmetika, Kaolinpulver, Tonerden, Farbstoffen und Porenbildnern.

17. Verfahren nach Anspruch 1, **dadurch gekennzeichnet, dass** die nach der Vernetzung der Mineralmatrix erhaltenen Kugeln durch Filtration aus dem Reaktionsmedium extrahiert werden.

18. Verfahren nach Anspruch 17, **dadurch gekennzeichnet, dass** die durch Filtration abgetrennten Kugeln mit Wasser oder mit einer basischen wässrigen Lösung mit einem pH-wert < 8 gewaschen werden.

19. Verfahren nach einem der Ansprüche 17 oder 18, **dadurch gekennzeichnet, dass** die durch Filtration abgetrennten Kugeln einer Lufttrockung unterzogen werden, nachdem sie gegebenenfalls mit Aceton oder Alkohol gewaschen wurden.

20. Verfahren nach einem der Ansprüche 17 oder 18, **dadurch gekennzeichnet, dass** die durch Filtration vom Reaktionsmedium abgetrennten Kugeln durch Lyophilisation getrocknet werden.

21. Verfahren nach einem der Ansprüche 17 oder 18, **dadurch gekennzeichnet, dass** die aus dem Reaktionsmedium durch Filtration extrahierten Kugeln mit Aceton oder Alkohol gewaschen werden, und dann in eine Lösung gegeben werden, die ein Alkoxid eines Metalls enthält, das in einem wasserfreien organischen Lösemittel gelöst ist.

22. Verfahren nach einem der Ansprüche 17 oder 18, **dadurch gekennzeichnet, dass** die durch Filtration vom Reaktionsmedium abgetrennten Kugeln einer Kalzinierung bei einer Temperatur im Bereich zwischen 400 °C und 800 °C unterzogen werden.

23. Material, das durch ein Verfahren nach Anspruch 1 erhalten wurde, das aus in einem wässrigen Medium suspendierten Kugeln gebildet wird, **dadurch gekennzeichnet, dass** die Kugeln einen Durchmesser von 0,5 mm bis zu einigen mm aufweisen und dass sie aus einer hydratisierten gelatinierten Alginatmatrix, einer vernetzten Mineralmatrix und einem Hydroxid des mehrwertigen Kations des Salzes bestehen, das als Gelatinierungsmittel verwendet wird.

24. Kugeln, die durch ein Verfahren nach einem der Ansprüche 19 oder 20 erhalten werden, **dadurch gekennzeichnet, dass** sie aus einem Alginatnetz, einer vernetzten Mineralmatrix und einem Hydroxid des Kations bestehen, das von dem Gelatinierungsmittel des Alginats stammt.

25. Kugeln, die durch ein Verfahren nach Anspruch 21 erhalten werden, **dadurch gekennzeichnet, dass** sie aus einem Kern gebildet werden, der aus einem Alginatnetz, einer vernetzten Mineralmatrix und einem Hydroxid des Kations, das von dem Gelatinierungsmittel des Alginats stammt, und einer Oberflächenschicht aus Metalloxid oder Metallhydroxid bestehen.

26. Kugeln, die durch ein Verfahren nach Anspruch 22 erhalten wurden, **dadurch gekennzeichnet, dass** sie aus einer vernetzten Mineralmatrix und einem Hydroxid des Kations, das von dem Gelatinierungsmittel des Alginats stammt, bestehen, wobei sie porös und frei von organischen Verbindungen sind.

27. Kugeln nach einem der Ansprüche 24 bis 20, **dadurch gekennzeichnet, dass** sie ferner mindestens eine Verbindung enthalten, ausgewählt aus Pigmenten und organischen Farbstoffen zur Verwendung in Kosmetika, Kaolinpulver, Tonerden, Farbstoffen.
